# EUROPEAN PATENT SPECIFICATION

(11) **EP 4 438 274 B1**
(45) Date of publication and mention of the grant of the patent: **09.12.2026**
(21) Application number: 24166409.3
(22) Date of filing: 26.03.2024
(51) Int. Cl.: B29C 65/04, B29C 65/36, B29C 65/48, B29C 65/50, B29C 65/78, B29C 73/34, F16G 3/00, F16G 3/10

(54) **CONVEYANCE BELT WELDING METHOD**
FÖRDERBANDSCHWEISSVERFAHREN
PROCÉDÉ DE SOUDAGE DE COURROIE DE TRANSPORT

(30) Priority: 28.03.2023 JP 2023052015
(43) Date of publication of application: 02.10.2024
(73) Proprietor: Seiko Epson Corporation, Tokyo 160-8801 (JP)
(72) Inventor: YASHIRO, Hirotaka, Suwa-shi, 392-8502 (JP); AOKI, Hiroki, Suwa-shi, 392-8502 (JP); AIZAWA, Tadashi, Suwa-shi, 392-8502 (JP); SASAKI, Tsuneyuki, Suwa-shi, 392-8502 (JP)
(74) Representative: Lewis Silkin LLP

(56) References cited:
- DE-A1- 102010 060 941
- US-A- 5 342 250

## Description

### BACKGROUND

### 1. Technical Field

The present disclosure relates to a conveyance belt welding method.

### 2. Related Art

JP-A-2004-299826 discloses a conveyance mechanism with a fastener provided in a conveyance belt itself for the purpose of improving the efficiency of the operation of replacing the conveyance belt used in a recording apparatus and the like, for example. In such a conveyance mechanism, the conveyance belt can be attached by opening and closing the fastener without disassembling the recording apparatus.

With such a conveyance belt attaching method, however, irregularity is formed in the conveyance belt due to the fastener. Consequently, the conveyance accuracy for the medium may be reduced. In view of this, it is desired to improve the efficiency of the operation related to attaching of the conveyance belt while ensuring the attaching quality of the conveyance belt.

DE 10 2010 060941 A1 discloses a process for joining conveyor belts which contain metal inserts by vulcanization, and also a corresponding vulcanizing press. The belt portions to be joined are arranged between a first crossbeam leading through underneath the belt underside and a second crossbeam leading over the belt top side. The crossbeams are pressed against one another by a pressure-exerting device, with the interposition of the belt portions. The belt material is heated up to vulcanization temperature by at least one heating device arranged in the region of the belt underside and/or the belt top side, wherein the heating device is an electrical inductor which generates a magnetic field. The inductor is arranged between the two crossbeams and in such a manner in relation to the belt material that, after the inductor has been activated, the metal inserts of the belt portions to be joined are located in the magnetic field thereof.

US 5342250 is also relevant.

### SUMMARY

A conveyance belt welding method according to the invention is defined in claim 1.

With the claimed configuration, with the material with a predetermined electrical conductivity or the material with a dielectric loss tangent higher than that of the conveyance belt sandwiched between the one end portion and the other end portion where the conveyance belt is to be welded, the region to which the heat energy is transmitted through generation of electromagnetic waves can be concentrated. In this manner, heating to unnecessary regions of the conveyance belt can be suppressed. Thus, the welding quality of the conveyance belt can be improved, and the efficiency of the operation related to the welding of the conveyance belt can be improved.

The material may include carbon black.

### BRIEF DESCRIPTION OF THE DRAWINGS

FIG. 1 is a schematic view illustrating a conveyance belt welding apparatus, a recording apparatus and a conveyance apparatus.
FIG. 2 is a block diagram illustrating the conveyance belt welding apparatus.
FIG. 3 is a perspective view illustrating an electromagnetic wave generation unit.
FIG. 4 is a perspective view illustrating the electromagnetic wave generation unit.
FIG. 5 is a perspective view illustrating a first jig.
FIG. 6 is a top view illustrating of the first jig.
FIG. 7 is a schematic view illustrating a conveyance belt.
FIG. 8 is a flowchart illustrating a first welding process.
FIG. 9 is a schematic view illustrating the electromagnetic wave generation unit, a second jig, the conveyance belt, a heat energy transmitted to the conveyance belt.
FIG. 10 is a flowchart illustrating a second welding process.
FIG. 11 is a perspective view illustrating a third jig.
FIG. 12 is a schematic view illustrating the electromagnetic wave generation unit, a third jig and the conveyance belt.
FIG. 13 is a perspective view illustrating the third jig.

### DESCRIPTION OF EMBODIMENTS

### First Embodiment

An embodiment of a conveyance belt welding method and a conveyance belt welding jig using a conveyance belt welding apparatus as an example of a heating apparatus is described below. In the following description, the direction that intersects the vertical direction Z is the first horizontal direction X, and the direction that intersects the vertical direction Z and the first horizontal direction X is the second horizontal direction Y. One direction along the first horizontal direction X is the direction X1, and the other direction along the first horizontal direction X is the direction X2. One direction along the second horizontal direction Y is the direction Y1, and the other direction along the second horizontal direction Y is the direction Y2. The upward direction in the vertical direction Z is the upward direction Z1, and the downward direction in the vertical direction Z is the downward direction Z2. The downward direction Z2 is an example of the first direction. A plan view in the vertical direction Z may be a plan view in the upward direction Z1 or a plan view in the downward direction Z2. A plan view in the vertical direction Z is simply described as plan view.

### Configurations of Recording Apparatus 90 and Conveyance Apparatus 91

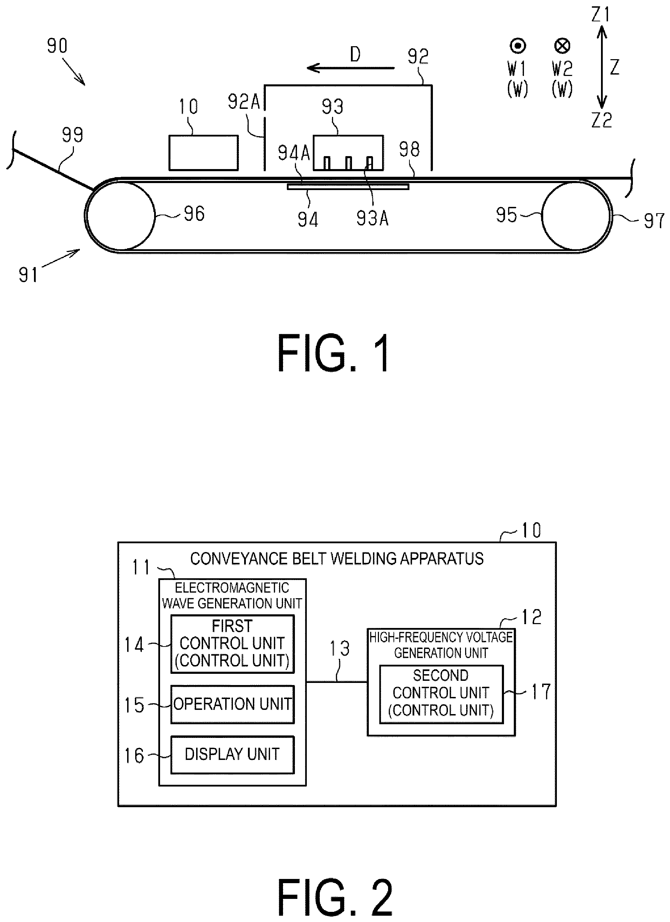

As illustrated in FIG. 1, a conveyance belt welding apparatus 10 can perform welding of conveyance belt 97. A conveyance belt 97 is an example of the heating object. The conveyance belt 97 may be used for the recording apparatus 90 and the conveyance apparatus 91.

The recording apparatus 90 is configured to perform recording on medium 99. The recording apparatus 90 may be an ink-jet printer that performs recording by ejecting ink as an example of liquid to the medium 99. The medium 99 is fabric, but may also be paper, for example.

The recording apparatus 90 includes an apparatus housing 92 and a recording unit 93. The apparatus housing 92 is configured to house at least the recording unit 93. The apparatus housing 92 may be configured to not house a first roller 95. Specifically, the first roller 95 may be exposed from the apparatus housing 92. The apparatus housing 92 may be configured to not house a second roller 96. Specifically, the second roller 96 may be exposed from the apparatus housing 92.

The apparatus housing 92 may include an opening/closing door 92A. The opening/closing door 92A may be provided on the side of a conveyance direction D of the medium 99 in the apparatus housing 92. The conveyance direction D is a direction along the longitudinal direction of the medium 99. The opening/closing door 92A is a door that can open and close the inside of the apparatus housing 92. Thus, the inside of the apparatus housing 92 can be accessed by opening the opening/closing door 92A. Specifically, by opening the opening/closing door 92A, a support surface 94A can be accessed. By opening the opening/closing door 92A, the conveyance belt welding apparatus 10 can be operated inside the apparatus housing 92.

The recording unit 93 is configured to perform recording on the medium 99 by ejecting liquid to the medium 99. The recording unit 93 performs recording on the medium 99 conveyed by the conveyance belt 97. The recording unit 93 performs recording on the medium 99 supported by the conveyance belt 97 and a support stand 94.

The recording unit 93 may be a head. The recording unit 93 may be a serial head or a line head. The serial head is a head that performs scanning in a width direction W of the medium 99. The line head is a head that simultaneously performs recording over the width direction W of the medium 99. One direction along the width direction W is a first width direction W1, and the other direction along the width direction W is a second width direction W2.

In the case where the recording unit 93 is a serial head, it is disposed at an initial position when it does not perform the recording. The initial position may be located on the first width direction W1 side than the recording region. The initial position may be located on the first width direction W1 side than the conveyance belt 97. Specifically, in the case where the recording unit 93 is a serial head, it is disposed at a position where it does not interfere with the welding of the conveyance belt 97.

The recording unit 93 includes a plurality of nozzles 93A. Each of the plurality of nozzles 93A is configured to open in the downward direction Z2. Each of the plurality of nozzles 93A is configured to eject liquid.

The recording apparatus 90 includes the support stand 94. The support stand 94 is configured to support the medium 99 conveyed by the conveyance belt 97 together with the conveyance belt 97. The support stand 94 is located on the downward direction Z2 side of the recording unit 93. The support stand 94 may have a flat plate shape. The support stand 94 may be made of metal.

The support stand 94 includes the support surface 94A. The support surface 94A is a surface facing the upward direction Z1. The support surface 94A is located on the downward direction Z2 side of the recording unit 93. The support surface 94A is provided to face the plurality of nozzles 93A.

In this manner, the support stand 94 is configured to support the medium 99 conveyed by the conveyance belt 97 together with the conveyance belt 97. In addition, the support stand 94 may be configured to support the conveyance belt 97 when welding the conveyance belt 97. The member that supports the conveyance belt 97 when welding the conveyance belt 97 is not limited to the support stand 94.

The recording apparatus 90 includes the conveyance apparatus 91. The conveyance apparatus 91 is configured to convey the medium 99 in the conveyance direction D. The conveyance apparatus 91 may include a plurality of rollers. The conveyance apparatus 91 may include the first roller 95 and the second roller 96. The first roller 95 is located upstream of the second roller 96 in the conveyance direction D. The first roller 95 is located upstream of the recording unit 93 in the conveyance direction D. The second roller 96 is located downstream of the recording unit 93 in the conveyance direction D.

The conveyance apparatus 91 includes the conveyance belt 97. That is, the recording apparatus 90 includes the conveyance belt 97. The conveyance belt 97 can convey the medium 99. The conveyance belt 97 is configured to convey the medium 99 in the state of supporting the medium 99. The conveyance belt 97 is wound around a plurality of rollers. The conveyance belt 97 is wound around the first roller 95 and the second roller 96. When the first roller 95 rotates, the conveyance belt 97 moves along the first roller 95 and the second roller 96.

The conveyance belt 97 includes an outer peripheral surface 98. The conveyance belt 97 that supports the medium 99 is a belt with the outer peripheral surface 98 on which an adhesive is applied, for example. The medium 99 is bonded to the outer peripheral surface 98 with an adhesive. In this manner, the posture of the medium 99 is stabilized. The adhesive is not limitative, and the medium 99 may be bonded to the outer peripheral surface 98 with a suction force, an electrostatic force, an intermolecular force, and the like, for example.

In this manner, the conveyance belt 97 conveys the medium 99 supported by the outer peripheral surface 98 by moving along the first roller 95 and the second roller 96. The conveyance apparatus 91 conveys the medium 99 supported by the conveyance belt 97 by rotating at least one of the first roller 95 and the second roller 96.

The conveyance belt 97 may have a layered structure of a polyurethane material and an aramid material. The conveyance belt 97 can be welded by being heated at a predetermined temperature for a predetermined time in a state of being pressed with a predetermined pressure. Specifically, the conveyance belt 97 can be welded through heating of the polyurethane material. Deformation due to the welding of the conveyance belt 97 is suppressed by the pressing with a predetermined pressure.

The welding of the conveyance belt 97 includes coupling welding. The coupling welding is performed when replacing the conveyance belt 97 with an endless shape. The coupling welding is welding for forming the conveyance belt 97 with an endless shape by coupling the longitudinal both end portions of the conveyance belt 97. The coupling welding welds the longitudinal both end portions of the conveyance belt 97.

The longitudinal both end portions of the conveyance belt 97 may be obliquely cut along the width direction W in plan view. Specifically, the longitudinal both end portions of the conveyance belt 97 may be processed into a continuous V-shape along the width direction W in plan view. In this case, the coupling welding welds the longitudinal both end portions of the conveyance belt 97 with the longitudinal both end portions of the conveyance belt 97 stacked on each other in the direction along the conveyance direction D. In this manner, the welding area can be increased, and thus the welding quality of the conveyance belt 97 can be improved. In this manner, the conveyance accuracy of the conveyance belt 97 can be improved.

The welding of the conveyance belt 97 includes repair welding. The repair welding is performed when repairing the repair region of the conveyance belt 97. The repair region of the conveyance belt 97 is a part of the region of the conveyance belt 97 that needs to be repaired as it deteriorates over time.

### Configuration of Conveyance Belt Welding Apparatus 10

As illustrated in FIG. 2, the conveyance belt welding apparatus 10 includes an electromagnetic wave generation unit 11. The conveyance belt welding apparatus 10 may include a high-frequency voltage generation unit 12. The conveyance belt welding apparatus 10 may include a transmission line 13.

The electromagnetic wave generation unit 11 is configured to generate electromagnetic waves. The electromagnetic wave generation unit 11 generates an alternating current electric field through generation of electromagnetic waves. The electromagnetic wave generation unit 11 heats the conveyance belt 97 through generation of electromagnetic waves. The electromagnetic wave generation unit 11 can weld the conveyance belt 97 through heating. The main component of the electromagnetic waves generated by the electromagnetic wave generation unit 11 is an electric field. The electromagnetic wave generation unit 11 can significantly reduce the induction of the magnetic field due to the generated electric field in comparison with electromagnetic wave generation units that generate typical electromagnetic waves.

As a specific example, the electromagnetic wave generation unit 11 generates electromagnetic waves of 2.4 GHz, but this is not limitative. The electromagnetic wave generation unit 11 may generate electromagnetic waves of 3 MHz to 300 MHz, for example. The electromagnetic wave generation unit 11 may generate electromagnetic waves of 300 M to 30 GHz, or more specifically electromagnetic waves of 10 MHz to 20 GHz, for example.

The conveyance belt welding apparatus 10 includes a control unit. The control unit controls the conveyance belt welding apparatus 10. Specifically, the electromagnetic wave generation unit 11 may include a first control unit 14 as the control unit. The first control unit 14 controls the electromagnetic wave generation unit 11. The first control unit 14 controls various operations executed at the electromagnetic wave generation unit 11.

The control unit may be configured as a circuit including α: one or more processors that execute various processes in accordance with a computer program, β: one or more dedicated hardware circuits that execute at least some of various processes, or γ: their combinations. The hardware circuit is an application-specific integrated circuit, for example. The processor includes a CPU and a memory such as a RAM and a ROM, and the memory stores program codes or commands configured to cause the CPU to execute processes. The memory, i.e., a computer readable medium includes any readable mediums that can be accessed by general-purpose or dedicated computers.

The electromagnetic wave generation unit 11 may include an operation unit 15. The operation unit 15 is operable by the operator. The operation unit 15 may allow for an operation related to the conveyance belt welding apparatus 10. The operation unit 15 may allow for an operation related to the electromagnetic wave generation unit 11. The operation unit 15 may allow for an operation related to the high-frequency voltage generation unit 12. The operation unit 15 may allow for an operation of switching whether to generate electromagnetic waves from the electromagnetic wave generation unit 11.

The electromagnetic wave generation unit 11 may include a display unit 16. The display unit 16 may display information related to the conveyance belt welding apparatus 10. The operation unit 15 may display information related to the electromagnetic wave generation unit 11. The operation unit 15 may display information related to the high-frequency voltage generation unit 12. The display unit 16 may display information representing whether electromagnetic waves are being generated from the electromagnetic wave generation unit 11. The display unit 16 may be a liquid crystal display unit, or an LED lamp.

The high-frequency voltage generation unit 12 is configured to generate a high-frequency voltage. The high-frequency voltage generation unit 12 can supply a high-frequency voltage to the electromagnetic wave generation unit 11 through the transmission line 13. Specifically, the high-frequency voltage generation unit 12 generates the voltage to be applied to the electromagnetic wave generation unit 11.

The high-frequency voltage generation unit 12 may include a second control unit 17 as the control unit. The second control unit 17 controls the high-frequency voltage generation unit 12. The second control unit 17 controls various operations executed at the high-frequency voltage generation unit 12. The first control unit 14 and the second control unit 17 may exchange information. The conveyance belt welding apparatus 10 includes both the first control unit 14 and the second control unit 17 as the control unit, but the conveyance belt welding apparatus 10 may include one of them.

Note that the conveyance belt welding apparatus 10 may include an operation unit that can be operated at the high-frequency voltage generation unit 12 separately from the operation unit 15 of the electromagnetic wave generation unit 11. The conveyance belt welding apparatus 10 may include a display unit that displays information at the high-frequency voltage generation unit 12 separately from the display unit 16 of the electromagnetic wave generation unit 11.

The transmission line 13 is a line that couples the electromagnetic wave generation unit 11 and the high-frequency voltage generation unit 12. The transmission line 13 is a line for transmitting the high-frequency voltage generated by the high-frequency voltage generation unit 12 to the electromagnetic wave generation unit 11. That is, the transmission line 13 can transmit a high-frequency voltage.

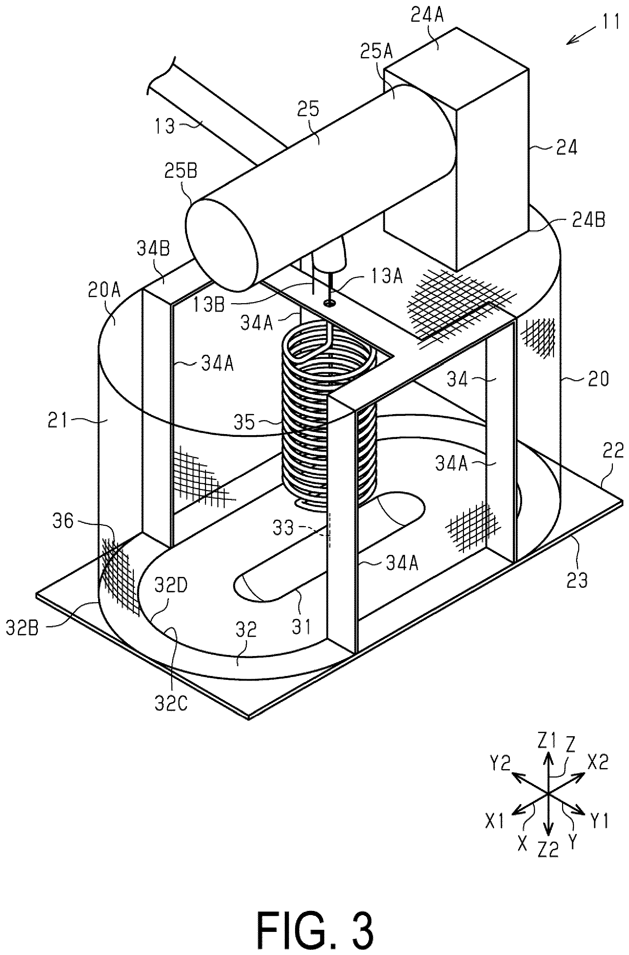

The transmission line 13 may be, but not limited to, a coaxial cable. As illustrated in FIG. 3, the transmission line 13 may include an inner conductor 13A and an outer conductor 13B. The inner conductor 13A may include a core wire of the transmission line 13. The outer conductor 13B may be an electromagnetic shield that covers the inner conductor 13A. The inner conductor 13A corresponds to an example of the first transmission line, and the outer conductor 13B corresponds to an example of the second transmission line.

### Configuration of Electromagnetic Wave Generation Unit 11

As illustrated in FIG. 3, the electromagnetic wave generation unit 11 includes a housing 20. The housing 20 makes up the inner space of the electromagnetic wave generation unit 11. The housing 20 can house various members making up the electromagnetic wave generation unit 11. That is, the housing 20 is configured to cover at least some of various members making up the electromagnetic wave generation unit 11. Specifically, the housing 20 may be configured to cover a first electrode 31, a second electrode 32, a first conductor 33 and a second conductor 34. In this manner, no direct contact with the first electrode 31, the second electrode 32, the first conductor 33 and the second conductor 34 is made from the outside of the housing 20. The inner space is a space that can house at least the first electrode 31 and the second electrode 32.

The housing 20 may include a housing case 21. That is, the conveyance belt welding apparatus 10 may include the housing case 21. The housing 20 includes a contact part 22. That is, the conveyance belt welding apparatus 10 includes the contact part 22. The housing case 21 is composed of a material with transmissivity, and therefore only an end portion is illustrated in FIG. 3.

The housing case 21 makes up the inner space of the electromagnetic wave generation unit 11 together with the contact part 22. The housing case 21 can house various members making up the electromagnetic wave generation unit 11. The housing case 21 has a rounded rectangular shape in plan view, but the shape is not limited and may be a rectangular shape, for example. The rounded rectangular shape is composed of two straight lines and two curved lines. The two straight lines are extended in the first horizontal direction X and disposed side by side in the second horizontal direction Y. The two curved lines are located on both sides in the first horizontal direction X. The rounded rectangular shape may be a shape like an athletic track.

The housing case 21 is composed of an insulating member. The housing case 21 may be made of resin. The housing case 21 is coupled with the contact part 22. The housing case 21 extends from the contact part 22 in the upward direction Z1. In this manner, the housing case 21 is provided to cover the first electrode 31, the second electrode 32, the first conductor 33 and the second conductor 34 from the upward direction Z1 side. That is, the housing case 21 can house the first electrode 31, the second electrode 32, the first conductor 33 and the second conductor 34.

The housing case 21 may have transmissivity at least in part. The housing case 21 may be a transparent plastic case. In this manner, the inside of the conveyance belt welding apparatus 10 can be visually recognized from the outside.

The contact part 22 is located on the downward direction Z2 side of the housing case 21. The contact part 22 may have a flat plate shape. The contact part 22 has a rectangular shape in plan view, but the shape is not limited, and may have a rounded rectangular shape, for example. The contact part 22 may have a rectangular shape with the sides along the first horizontal direction X longer than the sides along the second horizontal direction Y in plan view. The contact part 22 is provided to cover the first electrode 31, the second electrode 32, the first conductor 33 and the second conductor 34 from the downward direction Z2 side.

The contact part 22 is composed of a material that transmits electromagnetic waves generated by the first electrode 31 and the second electrode 32. The contact part 22 is pressed with the conveyance belt 97 in contact with a contact surface 23 when welding the conveyance belt 97. As such, it is preferable that the contact part 22 be a material with a certain degree of hardness. In addition, the contact part 22 protects the first electrode 31, the second electrode 32, the first conductor 33 and the second conductor 34. Specifically, the contact part 22 protects the first electrode 31, the second electrode 32, the first conductor 33 and the second conductor 34 also from the stress caused by the pressing of the conveyance belt 97.

The contact part 22 is composed of an insulating member. The contact part 22 may be a glass plate. Specifically, the contact part 22 may have transmissivity at least in part. In this manner, a part or all of the region of the conveyance belt 97 in contact with the contact part 22 can be visually recognized from the outside of the conveyance belt welding apparatus 10. The contact part 22 may be a ceramic with high transparency. The contact part 22 may be a resin with low dielectric loss tangent.

The contact part 22 includes the contact surface 23. The contact surface 23 is a surface facing the downward direction Z2 side. The contact surface 23 can make contact with the conveyance belt 97 when welding the conveyance belt 97. When the conveyance belt welding apparatus 10 is used with the conveyance belt 97 supported at the support stand 94, the contact surface 23 can make contact with the conveyance belt 97 with the conveyance belt 97 sandwiched between it and the support stand 94.

The electromagnetic wave generation unit 11 may include a coupling part 24 and a holding part 25. The coupling part 24 may be composed of an insulating member. The coupling part 24 may be made of resin. The coupling part 24 extends along the vertical direction Z. The coupling part 24 includes an upper end portion 24A and a lower end portion 24B. The upper end portion 24A is coupled with the holding part 25. The lower end portion 24B is coupled with a top surface 20A of the housing 20. The lower end portion 24B may be located at the other direction X2 side in the first horizontal direction X in the top surface 20A of the housing 20.

The holding part 25 is a portion that can be grabbed by the operator. The holding part 25 is composed of an insulating member such as resin, but may be made of metal, for example. The holding part 25 may extend along the first horizontal direction X. The holding part 25 may extend in one direction X1 in the first horizontal direction X. The holding part 25 includes a base end portion 25A and a tip end portion 25B. The base end portion 25A is coupled with the upper end portion 24A of the coupling part 24. That is, the holding part 25 is coupled with the housing case 21 and insulated from the housing case 21.

The holding part 25 is provided at a position separated from the top surface 20A of the housing 20 in the upward direction Z1. The holding part 25 is provided at a position separated from the contact part 22 in the upward direction Z1. In addition, the holding part 25 is provided at a position separated from the first electrode 31 and the second electrode 32 in the upward direction Z1. The holding part 25 may be provided with the operation unit 15. The holding part 25 may be provided with the display unit 16.

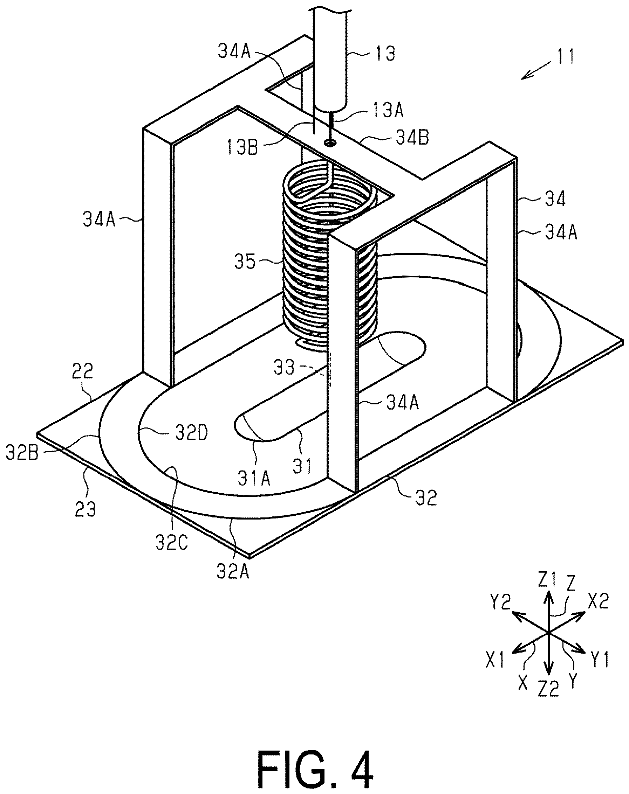

As illustrated in FIGS. 3 and 4, the electromagnetic wave generation unit 11 includes the first electrode 31, the second electrode 32, the first conductor 33, and the second conductor 34. The first electrode 31 has a flat plate shape. The first electrode 31 may have a rounded rectangular shape elongated in the first horizontal direction X in plan view.

The first electrode 31 includes a first electrode surface 31A. The first electrode surface 31A is a surface facing the downward direction Z2 side. The first electrode surface 31A is a surface parallel to the contact surface 23. That is, the first electrode surface 31A is a surface facing the conveyance belt 97 when welding the conveyance belt 97. In other words, the first electrode surface 31A is a surface facing the conveyance belt 97 side when welding the conveyance belt 97.

The second electrode 32 has a flat plate shape. The second electrode 32 includes a second electrode surface 32A. The second electrode surface 32A is a surface facing the downward direction Z2 side. The second electrode surface 32A is a surface parallel to the contact surface 23. That is, the second electrode surface 32A is a surface facing the conveyance belt 97 when welding the conveyance belt 97. In other words, the second electrode surface 32A is a surface facing the conveyance belt 97 side when welding the conveyance belt 97.

The second electrode 32 has a rounded rectangular shape at an outer periphery 32B in plan view. The outer periphery 32B is located inside the inner wall of the housing case 21. That is, the second electrode 32 is housed inside the housing case 21 in plan view. In this manner, the first electrode 31 and the second electrode 32 are covered with the housing case 21.

The second electrode 32 includes an opening 32C. The opening 32C has a rounded rectangular shape in plan view. That is, the second electrode 32 has a rounded rectangular shape at an inner periphery 32D in plan view. The second electrode 32 is disposed to surround the first electrode 31 in plan view. The downward direction Z2 is the direction toward the conveyance belt 97 when welding the conveyance belt 97.

The first electrode 31 is provided such that the first electrode surface 31A faces the contact part 22. The second electrode 32 is provided such that the second electrode surface 32A faces the contact part 22. In this manner, the contact part 22 is provided to face the first electrode surface 31A and the second electrode surface 32A between the first electrode surface 31A and the second electrode surface 32A, and the conveyance belt 97 when welding the conveyance belt 97.

The first electrode 31 and the second electrode 32 are provided such that the first electrode surface 31A and the second electrode surface 32A make contact with the contact part 22. The first electrode 31 and the second electrode 32 may be provided such that a gap is formed between the first electrode surface 31A and the second electrode surface 32A, and the contact part 22.

The first electrode 31 and the second electrode 32 are provided such that the first electrode surface 31A and the second electrode surface 32A are included in the contact surface 23 in plan view. Specifically, the first electrode 31 and the second electrode 32 are covered with the contact part 22 as viewed from the downward direction Z2. In this manner, the conveyance belt 97 and the contact surface 23 make contact with each other when welding the conveyance belt 97, and thus the first electrode 31 and the second electrode 32 are protected from the contact with the conveyance belt 97.

The first electrode 31 and the second electrode 32 are covered with the housing 20, and thus are not exposed from the housing 20. In this manner, the first electrode 31 and the second electrode 32 are provided so as not to make contact with the peripheral devices and the operator.

The first conductor 33 is configured to electrically couple the transmission line 13 and the first electrode 31. Specifically, the first conductor 33 is configured to electrically couple the inner conductor 13A and the first electrode 31. The first conductor 33 includes a coil 35. The coil 35 extends in the vertical direction Z.

The second conductor 34 is configured to electrically couple the transmission line 13 and the second electrode 32. Specifically, the second conductor 34 is configured to electrically couple the outer conductor 13B and the second electrode 32.

The second conductor 34 may include a first supporting part 34A. The second conductor 34 may include a plurality of the first supporting parts 34A. The second conductor 34 may include a second supporting part 34B.

The first supporting part 34A is electrically coupled to the second electrode 32. The first supporting part 34A extends in the upward direction Z1 from the second electrode 32. The first supporting part 34A may have a flat plate shape. The first supporting part 34A may have the same width as the second electrode 32 in the second horizontal direction Y. The first supporting part 34A may have a flat plate shape with a small thickness with respect to the first horizontal direction X. The first supporting part 34A is configured to be short in the first horizontal direction X, and long in the vertical direction Z to maintain the distance from the first electrode 31 and the second electrode 32 in the vertical direction Z while ensuring the rigidity. The first supporting part 34A may be made of metal. The first supporting part 34A is configured to support the second supporting part 34B.

The second supporting part 34B is electrically coupled to the first supporting part 34A. The second supporting part 34B is provided at the upper end portion of the first supporting part 34A. The second supporting art 34B may be integrated with the first supporting part 34A. The second supporting part 34B may have a flat plate shape. The second supporting part 34B may have a flat plate shape with a small thickness with respect to the vertical direction Z. The second supporting part 34B may have an H-shape in plan view. The second supporting part 34B may be made of metal.

The second conductor 34 may include a shield part 36. The shield part 36 is configured to seamlessly cover the first electrode 31 and the second electrode 32 from the upward direction Z1 side. The shield part 36 has a function of suppressing the propagation of electromagnetic waves from the first electrode 31 and the second electrode 32. The shield part 36 has a net shape, and therefore a part of the shield part 36 is illustrated in a net-shaped pattern in FIG. 3.

The shield part 36 is electrically coupled to the second electrode 32. The shield part 36 is in line contact with the second electrode 32, but may be in point contact with the second electrode 32. The shield part 36 is provided to surround the entire region of the outer periphery 32B of the second electrode 32 in plan view. The shield part 36 extends in the upward direction Z1 from the second electrode 32.

The shield part 36 is electrically coupled to the first supporting part 34A. The shield part 36 may be located outside the first supporting part 34A. The shield part 36 is electrically coupled to the second supporting part 34B. The shield part 36 may be located on the upward direction Z1 side of the second supporting part 34B. The shield part 36 is supported by the first supporting part 34A and the second supporting part 34B.

The shield part 36 may be provided at a position separated by a predetermined distance from the inner wall of the housing case 21. In other words, the housing case 21 may be provided at a position separated by a predetermined distance from the outer wall of the shield part 36. In this manner, the housing case 21 covers the first electrode 31, the second electrode 32, the first conductor 33 and the second conductor 34. Preferably, the predetermined distance is a distance with which the parasitic capacitance generated between the housing case 21 and the shield part 36 is a predetermined capacitance or smaller.

The shield part 36 may be made of metal. The shield part 36 may have a net shape. In this manner, the second conductor 34 may have a net shape in part or in its entirety. Specifically, the second conductor 34 may have transmissivity at least in part. In addition, contrary to the shield part 36, the first supporting part 34A and the second supporting part 34B are composed in a minimum size to increase the visibility while ensuring the rigidity of the shield part 36.

With the electromagnetic wave generation unit 11 configured in this manner, the first electrode 31 and the second electrode 32 heat the conveyance belt 97 by generating electromagnetic waves in accordance with the application of the high-frequency voltage when a high-frequency voltage is applied through the transmission line 13. The first electrode 31 and the second electrode 32 can weld the conveyance belt 97 by heating the conveyance belt 97 at a predetermined temperature for a predetermined time. By pressing the conveyance belt 97 against the support stand 94 with the contact surface 23 in contact with the conveyance belt 97, the conveyance belt 97 is pressed at a predetermined pressure between the contact surface 23 and the support stand 94.

This electromagnetic wave generation unit 11 can transmit a large heat energy to the conveyance belt 97 through the generation of electromagnetic waves. As a specific example, the electromagnetic wave generation unit 11 can transmit a large heat energy of 100W to 500W to the conveyance belt 97 by generating electromagnetic waves to heat the conveyance belt 97 to approximately 160 degrees.

The electromagnetic wave generation unit 11 is an electromagnetic wave system, not a heat conduction system, and therefore may not include members such as electric heating wires for heating. In this manner, the electromagnetic wave generation unit 11 can be downsized. In this manner, the conveyance belt 97 can be welded by the electromagnetic wave generation unit 11 by using the extra space of the recording apparatus 90 without disassembling the apparatus housing 92 of the recording apparatus 90.

In addition, the electromagnetic wave generation unit 11 has a size that can be grabbed by the operator with one hand. The electromagnetic wave generation unit 11 is smaller than the width of the conveyance belt 97 although it depends on the size of the conveyance belt 97. In addition, it has a weight that can be moved in the state of being grabbed by the operator along with the welding of the conveyance belt 97, and can press the conveyance belt 97.

In addition, the minimum distance between the first electrode 31 and the second electrode 32 is 1/10 or smaller of the wavelength of the electromagnetic waves output from the electromagnetic wave generation unit 11. In this manner, most of electromagnetic waves that are generated in the application of the high-frequency voltage can be attenuated in the vicinity of the first electrode 31 and the second electrode 32. In this manner, the intensity of the electromagnetic waves that reach remote locations from the first electrode 31 and the second electrode 32 can be reduced. Specifically, the electromagnetic waves generated from the electromagnetic wave generation unit 11 are very strong in the vicinity of the first electrode 31 and the second electrode 32, but are very weak at a remote location.

This electromagnetic wave generation unit 11 can intensively generate the alternating current electric field in the vicinity of the first electrode 31 and the second electrode 32 when the frequency band of the generated electromagnetic waves is appropriately controlled. In other words, the influence of the generation of electromagnetic waves on the surroundings beyond the vicinity of the first electrode 31 and the second electrode 32 can be suppressed. The vicinity of the first electrode 31 and the second electrode 32 may correspond to a range of 3 mm to 3 cm, for example.

### Conveyance Belt Welding Jig

Now, a conveyance belt welding jig is described below. The conveyance belt welding jig is a jig for welding the conveyance belt 97 together with the conveyance belt welding apparatus 10.

### First Jig 70

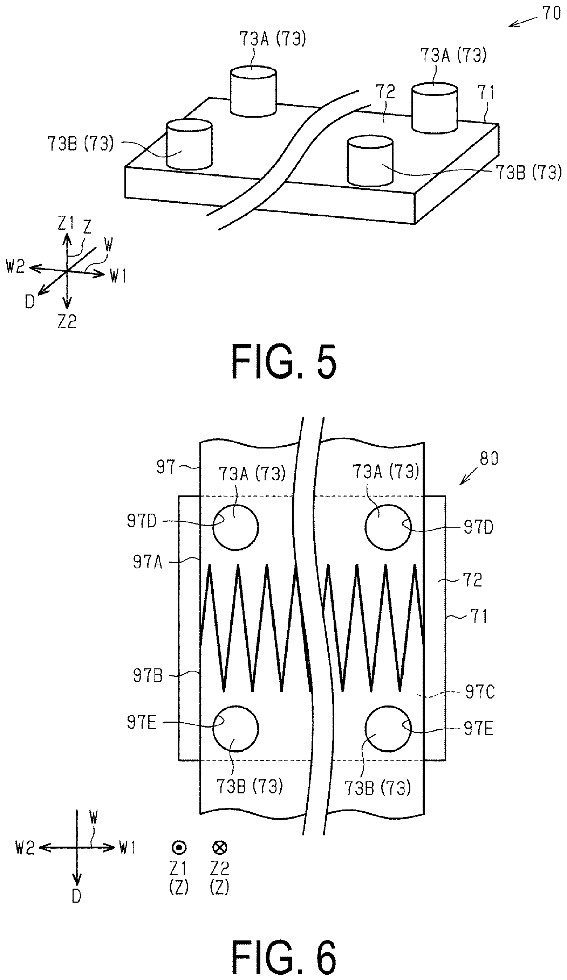

As illustrated in FIGS. 5 and 6, the conveyance belt welding jig may include a first jig 70. The first jig 70 is configured to support the conveyance belt 97 when welding the conveyance belt 97 by using the conveyance belt welding apparatus 10. Specifically, the first jig 70 is configured to position one end portion 97A of the conveyance belt 97 and the other end portion 97B of the conveyance belt 97, and support the conveyance belt 97.

The first jig 70 may be installed downstream of the recording unit 93 in the conveyance direction D, or installed upstream of the recording unit 93 in the conveyance direction D. The first jig 70 may be installed at the support stand 94. Specifically, the first jig 70 can be installed outside the apparatus housing 92, and is installed at a position that is accessible from the outside of the apparatus housing 92. In addition, the first jig 70 can be installed without performing the step of disassembling the apparatus housing 92 of the recording apparatus 90.

The first jig 70 includes a belt supporting part 71. The belt supporting part 71 has a flat plate shape. The belt supporting part 71 supports the conveyance belt 97. The belt supporting part 71 has a width longer than the conveyance belt 97 in the width direction W. The belt supporting part 71 is longer than the conveyance belt welding apparatus 10 in the width direction W. The belt supporting part 71 may be made of metal.

The belt supporting part 71 includes a belt support surface 72. The belt support surface 72 is a surface facing the upward direction Z1 side. The belt support surface 72 supports the conveyance belt 97. The belt support surface 72 supports a rear surface 97C of the conveyance belt 97.

The first jig 70 may include a positioning part 73. The first jig 70 may include a plurality of the positioning parts 73. The first jig 70 may include a first positioning part 73A and a second positioning part 73B as the positioning part 73. The first jig 70 may include a plurality of the first positioning parts 73A and a plurality of the second positioning parts 73B as the positioning part 73.

The positioning part 73 may be configured to protrude toward the upward direction Z1 side from the belt support surface 72. The positioning part 73 may be able to be inserted to a first through hole 97D and a second through hole 97E provided in the conveyance belt 97. In this manner, when inserted to the first through hole 97D and the second through hole 97E provided in the conveyance belt 97, the positioning part 73 positions the conveyance belt 97 supported by the belt support surface 72.

The plurality of first positioning parts 73A is provided along the width direction W. The plurality of first positioning parts 73A may be provided at both end portions in the width direction W. The first positioning part 73A can be inserted to the first through hole 97D provided at the one end portion 97A where the conveyance belt 97 is to be welded. In this manner, the first positioning part 73A positions the one end portion 97A of the conveyance belt 97 supported by belt support surface 72 by being inserted to the first through hole 97D.

The plurality of second positioning parts 73B is provided along the width direction W. The plurality of second positioning parts 73B may be provided at both end portions in the width direction W. The second positioning part 73B can be inserted to the second through hole 97E provided in the other end portion 97B where the conveyance belt 97 is to be welded. In this manner, the second positioning part 73B positions the other end portion 97B of the conveyance belt 97 supported by the belt support surface 72 by being inserted to the second through hole 97E.

The first through hole 97D and the second through hole 97E are provided at respective both end portions of the conveyance belt 97 in the width direction W. The first through hole 97D and the second through hole 97E are provided in a region that is cut off after the welding of the conveyance belt 97. Thus, even with the first through hole 97D and the second through hole 97E, the finished quality of the conveyance belt 97 after the welding is not affected.

### Welding Aid Member 74

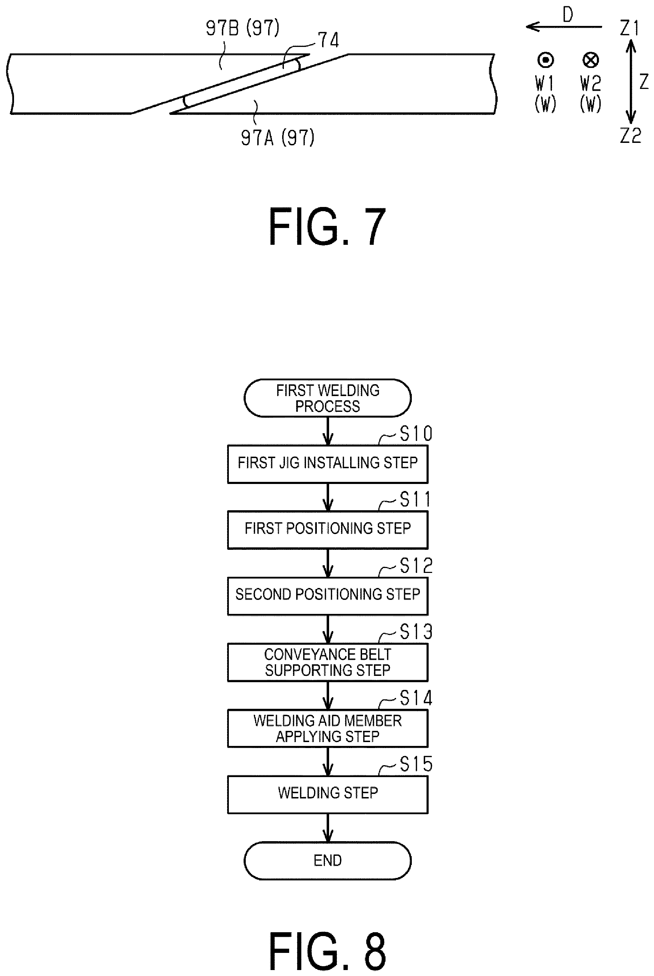

As illustrated in FIG. 7, when welding the conveyance belt 97, a welding aid member 74 is applied to the welding portion of the conveyance belt 97. The welding aid member 74 may be a material with a predetermined electrical conductivity. The welding aid member 74 may be a material with a dielectric loss tangent higher than the conveyance belt 97. The welding aid member 74 may include a carbon black.

Specifically, when the coupling welding of the conveyance belt 97 is performed, the welding aid member 74 may be sandwiched between the one end portion 97A of the conveyance belt 97 and the other end portion 97B of the conveyance belt 97. In addition, the one end portion 97A of the conveyance belt 97 and the other end portion 97B of the conveyance belt 97 may be cut such that they are tilted with respect to the thickness direction of the conveyance belt 97. This can increase the welding area, and the application area of the welding aid member 74, thus improving the welding quality. The one end portion 97A of the conveyance belt 97 and the other end portion 97B of the conveyance belt 97 may be cut along the thickness direction of the conveyance belt 97.

### First Welding Process

Next, a first welding process is described with reference to FIG. 8. The first welding process is a conveyance belt welding method for performing the coupling welding of the conveyance belt 97 by using the conveyance belt welding apparatus 10 and the first jig 70.

As illustrated in FIG. 8, at step S10, a first jig installing step is performed. In the first jig installing step, the first jig 70 is installed on the path where the conveyance belt 97 is wound around a plurality of rollers.

Next, at step S11, a first positioning step is performed. In the first positioning step, the first through hole 97D of the conveyance belt 97 is inserted to the first positioning part 73A. As a result, the one end portion 97A of the conveyance belt 97 is positioned at the first jig 70. That is, the first positioning step is a step of inserting the first through hole 97D provided in the one end portion 97A of the conveyance belt 97 to the first positioning part 73A provided in the first jig 70.

Next, at step S12, a second positioning step is performed. In the second positioning step, the conveyance belt 97 is maneuvered and wound around the plurality of rollers. Then, the second through hole 97E of the conveyance belt 97 is inserted to the second positioning part 73B with the conveyance belt 97 wound around the plurality of rollers. In this manner, the other end portion 97B of the conveyance belt 97 is positioned at the first jig 70. That is, the second positioning step is a step of inserting the second through hole 97E provided in the other end portion 97B of the conveyance belt 97 to the second positioning part 73B provided in the first jig 70.

Then, at step S13, a conveyance belt supporting step is performed. In the conveyance belt supporting step, the conveyance belt 97 is supported by the belt support surface 72 with the one end portion 97A of the conveyance belt 97 and the other end portion 97B of the conveyance belt 97 positioned at the first jig 70. In this manner, the conveyance belt supporting step is a step of supporting the conveyance belt 97 at the belt support surface 72. While step S13 is described as a step after steps S11 and S12 for the sake of convenience, the order of step S13 and steps S11 and S12 is not limited, and step S13 may be performed simultaneously with steps S11 and S12.

Next, at step S14, a welding aid member applying step is performed. In the welding aid member applying step, the welding aid member 74 is applied between the one end portion 97A of the conveyance belt 97 and the other end portion 97B of the conveyance belt 97. In this manner, the welding aid member applying step is a step of sandwiching the welding aid member 74 between the one end portion 97A of the conveyance belt 97 and the other end portion 97B of the conveyance belt 97.

At step S15, a welding step is performed. In the welding step, in the state of being supported by the first jig 70, the conveyance belt 97 is welded by using the conveyance belt welding apparatus 10. Specifically, in the conveyance belt welding apparatus 10, the high-frequency voltage generated by the high-frequency voltage generation unit 12 is applied to the electromagnetic wave generation unit 11 through the transmission line 13. In the electromagnetic wave generation unit 11, electromagnetic waves are generated when the high-frequency voltage is applied to the first electrode 31 and the second electrode 32. In particular, the electromagnetic waves are generated in the vicinity of the first electrode surface 31A and the second electrode surface 32A. Then, when the contact surface 23 makes contact with the conveyance belt 97, the heat energy contained in electromagnetic waves is transmitted to the conveyance belt 97 with the conveyance belt 97 pressed with a predetermined pressure between the contact surface 23 and the belt support surface 72. This heats the conveyance belt 97 and the welding aid member 74, and thus the one end portion 97A of the conveyance belt 97 and the other end portion 97B of the conveyance belt 97 are welded.

As described above, the welding step is a step of welding the conveyance belt 97 by the first electrode 31 and the second electrode 32 by generating electromagnetic waves in accordance with the application of the high-frequency voltage. Specifically, the welding step is a step of generating electromagnetic waves with the first through hole 97D inserted to the first positioning part 73A and the second through hole 97E inserted to the second positioning part 73B. In this manner, the welding step is a step of welding the conveyance belt 97 supported by the belt support surface 72 by the conveyance belt welding apparatus 10.

### Operations and Effects of First Embodiment

Operations and effects of the first embodiment are described below.

(1-1) In some situation replacement of the conveyance belt 97 becomes necessary due to age-related deterioration. In such case, in the related art, in replacement of the conveyance belt 97, the conveyance belt 97 is welded by heating the conveyance belt 97 in a sandwiched and pressed state. However, this results in the increase in the size of the conveyance belt welding apparatus provided with the above-mentioned function. In particular, since the conveyance belt 97 is heated by the heat conduction system with no generation of electromagnetic waves, electric heating wires for heating and metal members for heat conduction have to be used, resulting in the increase in the size of the conveyance belt welding apparatus. As a result, the operation efficiency is reduced regardless of whether conveying the conveyance belt welding apparatus to the installation position of the recording apparatus, or conveying the recording apparatus to the installation position of the conveyance belt welding apparatus. In addition, the recording apparatus does not have the space for using the conveyance belt welding apparatus. This requires disassembly of the recording apparatus when using known conveyance belt welding apparatuses. This also reduces the operation efficiency.

In view of this, the first electrode 31 and the second electrode 32 weld the conveyance belt 97 by generating electromagnetic waves in accordance with the application of the high-frequency voltage. With this configuration, by generating electromagnetic waves in accordance with the application of the high-frequency voltage, high heat energy can be transmitted to the conveyance belt 97. Thus, the efficiency of the operation related to the welding of the conveyance belt 97 can be improved while ensuring the conveyance accuracy of the conveyance belt 97.

(1-2) In addition, when an electromagnetic wave system of generating electromagnetic waves is employed, the electromagnetic wave generation unit 11 can be downsized by comparison with the heat conduction system of not generating electromagnetic waves. In this manner, by reducing the size of the electromagnetic wave generation unit 11, it can be moved by being grabbed by the operator without the necessity of disassembling the apparatus housing 92 of the recording apparatus 90. Thus, the efficiency of the operation related to the welding of the conveyance belt 97 can be improved.

(1-3) The housing case 21 makes up the inner space together with the contact part 22, and has an insulating property. In this manner, the first electrode 31 and the second electrode 32 can be housed in the inner space by using the contact part 22 and the housing case 21, and the direct contact of the first electrode 31 and the second electrode 32 with the surroundings can be suppressed. In addition, the insulating property from the first electrode 31 and the second electrode 32 can be ensured. Thus, the influence of the generation of electromagnetic waves on the surroundings can be suppressed.

Specifically, the electromagnetic wave generation unit 11 is downsized and can be grabbed by the operator, and thus further remarkable effects are provided. In addition, the first electrode 31 and the second electrode 32 are very small relative to the wavelength of the electromagnetic waves. In this manner, with the housing case 21 configured such that peripheral devices with a size close to the wavelength of the electromagnetic waves do not make contact with the first electrode 31 and the second electrode 32, the influence of the generation of electromagnetic waves on the surroundings can be suppressed.

(1-4) The holding part 25 that can be grabbed by the operator is also insulated from the housing case 21. In this manner, the insulating property of the holding part 25, and the first electrode 31 and the second electrode 32 can be further ensured. Thus, the influence of the generation of electromagnetic waves on the surroundings can be suppressed.

(1-5) The holding part 25 is provided at a position separated from the first electrode 31 and the second electrode 32 than the housing case 21. In this manner, the distance between the holding part 25, and the first electrode 31 and the second electrode 32 can be ensured. Thus, the influence of the generation of electromagnetic waves on the surroundings can be suppressed. In particular, no problem occurs even when the holding part 25 is grabbed by the operator with bare hands, and the influence of the generation of electromagnetic waves can be suppressed.

(1-6) In the related art, the heat conduction system is used, and the conveyance belt 97 is heated in the state where the conveyance belt 97 is pressed with the conveyance belt 97 sandwiched by a metal plate. As such, the region for heating the conveyance belt 97 is covered with the metal plate, and the welding state of the conveyance belt 97 cannot be visually recognized.

In view of this, the housing case 21 has transmissivity at least in part, and the contact part 22 has transmissivity at least in part. With this configuration, the visibility of the region of the conveyance belt 97 in contact with the contact surface 23 can be improved through the housing case 21 and the contact part 22. In this manner, the welding state of the region of the conveyance belt 97 in contact with the contact surface 23 can be easily visually recognized. Thus, the efficiency of the operation related to the welding of the conveyance belt 97 can be improved.

In addition, since the welding state of the conveyance belt 97 is a delicate operation, the welding quality of the conveyance belt 97 can be improved by improving the visibility of the welding region of the conveyance belt 97.

Specifically, when the welding state of the conveyance belt 97 can be visually recognized in the case where the repair welding of the conveyance belt 97 is performed, the welding quality of the conveyance belt 97 can be improved, and the efficiency of the operation related to the welding of the conveyance belt 97 can be improved.

(1-7) The second conductor 34 has a net shape in part or in its entirety. With this configuration, through the second conductor 34 housed in the housing case 21, the visibility of the region of the conveyance belt 97 in contact with the contact surface 23 can be improved. In this manner, the welding state of the region of the conveyance belt 97 in contact with the contact surface 23 can be easily visually recognized. Thus, the efficiency of the operation related to the welding of the conveyance belt 97 can be improved.

(1-8) In the related art, it is necessary to improve the welding quality of the conveyance belt 97 to ensure the conveyance accuracy of the medium 99. In this manner, in the steps of the related art, the one end portion 97A of the conveyance belt 97 and the other end portion 97B of the conveyance belt 97 are aligned, and the positions of the conveyance belt 97 in the width direction W are aligned at an operation location separated from the recording apparatus. Thereafter, the one end portion 97A of the conveyance belt 97 and the other end portion 97B of the conveyance belt 97 are temporarily fixed by soldering, for example. Then, the steps are performed such that the conveyance belt 97 is set at the workbench and welded, and thereafter the recording apparatus is installed. By improving the welding quality in this manner, the conveyance accuracy of the medium 99 is ensured, but the efficiency of the operation related to the welding of the conveyance belt 97 is reduced.

In this manner, the first jig 70 includes the first positioning part 73A that can be inserted to the first through hole 97D, and the second positioning part 73B that can be inserted to the second through hole 97E as the positioning part 73 for positioning the conveyance belt 97. With this configuration, the conveyance belt welding apparatus 10 can weld the conveyance belt 97 supported by the belt support surface 72 with the first through hole 97D inserted to the first positioning part 73A and the second through hole 97E inserted to the second positioning part 73B. In this manner, the welding quality of the conveyance belt 97 can be improved without performing the steps such as the temporal fixing step, for example. Thus, the welding quality of the conveyance belt 97 can be improved, and the efficiency of the operation related to the welding of the conveyance belt 97 can be improved.

(1-9) In particular, by using the conveyance belt welding apparatus 10, the welding of the conveyance belt 97 can be achieved in the state of being attached to the recording apparatus 90. In this manner, the welding quality can be improved without performing the steps such as the alignment of the conveyance belt 97 in the width direction W, for example. Thus, the welding quality of the conveyance belt 97 can be improved, and the efficiency of the operation related to the welding of the conveyance belt 97 can be improved.

(1-10) In addition, before attaching the conveyance belt 97 to the recording apparatus 90, the first through hole 97D and the second through hole 97E can be accurately provided to the conveyance belt 97 at a flat and wide location, for example. In this manner, the positioning accuracy of the conveyance belt 97 can be improved, and the welding of the conveyance belt 97 can be achieved in the state of being attached to the recording apparatus 90. Thus, the welding quality of the conveyance belt 97 can be improved, and the efficiency of the operation related to the welding of the conveyance belt 97 can be improved.

(1-11) In the related art, when the coupling welding of the conveyance belt 97 is performed, the heat has been transmitted to unnecessary regions in the one end portion 97A of the conveyance belt 97 and the other end portion 97B of the conveyance belt 97, thus impairing the welding quality of the conveyance belt 97.

In addition, the heating value of the generation of electromagnetic waves differs depending on the type of the conveyance belt 97 even when the conveyance belt 97 is mainly made of the same polyurethane material. As such, the welding quality may be varied depending on the type of the conveyance belt 97 even when electromagnetic waves are generated in the same manner.

In view of this, with the welding aid member 74 sandwiched between the one end portion 97A of the conveyance belt 97 and the other end portion 97B of the conveyance belt 97, the region to which the heat energy is transmitted through generation of electromagnetic waves can be concentrated. In this manner, heating to unnecessary regions in the conveyance belt 97 can be suppressed. Thus, the welding quality of the conveyance belt 97 can be improved, and the efficiency of the operation related to the welding of the conveyance belt 97 can be improved. In particular, the heat energy can be intensively transmitted to the required region, and thus energy saving can be achieved.

(1-12) In addition, by using the welding aid member 74 in accordance with the type of the conveyance belt 97, the heating value to the conveyance belt 97 can be adjusted. Thus, the welding quality of the conveyance belt 97 can be improved.

### Second Embodiment

Next, a second embodiment is described. In the following description, the overlapping description of the same configurations as those of the above-described embodiment will be omitted or simplified, and the configurations different from those of the above-described embodiment will be mainly described.

### Second Jig 75

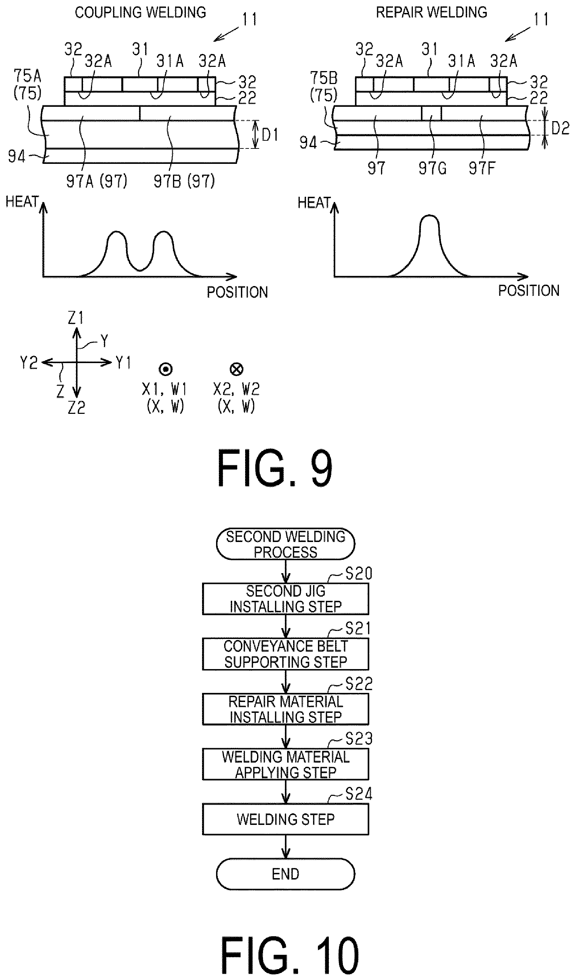

As illustrated in FIG. 9, in the second embodiment, the conveyance belt welding jig may include a second jig 75. The second jig 75 is a jig used when welding the conveyance belt 97 by using the conveyance belt welding apparatus 10. The second jig 75 may be used when the coupling welding of the conveyance belt 97 is performed, or may be used when the repair welding of the conveyance belt 97 is performed. A repair material 97G may be disposed in a repair region 97F of the conveyance belt 97. The repair material 97G may be composed of the same material as the conveyance belt 97. Preferably, the repair material 97G has a size slightly smaller than the repair region 97F. As described above, it can be said that the repair material 97G is a supply material that is supplied to the repair region 97F when the repair welding of the conveyance belt 97 is performed.

The second jig 75 can be installed between the conveyance belt 97 and the support stand 94. In this manner, the second jig 75 is provided between the conveyance belt 97 and the support stand 94 when welding the conveyance belt 97 by using the conveyance belt welding apparatus 10. The second jig 75 may have a flat plate shape. The second jig 75 is composed of an insulating member. The second jig 75 may be a glass plate.

The second jig 75 may include a plurality of types of jigs. The second jig 75 may include a coupling jig 75A and a repairing jig 75B. The coupling jig 75A is used when the coupling welding of the conveyance belt 97 is performed. The repairing jig 75B is used when the repair welding of the conveyance belt 97 is performed. The coupling jig 75A and the repairing jig 75B are different from each other in the thickness. The thickness of the coupling jig 75A is a distance D1. The thickness of the repairing jig 75B is a distance D2. The distance D2 is smaller than the distance D1.

The following describes an example case where the conveyance belt welding apparatus 10 and the conveyance belt 97 are in the same positional relationship, and the same high-frequency voltage is applied to the first electrode 31 and the second electrode 32. In this case, the coupling jig 75A can transmit the heat energy to the conveyance belt 97 over a wider range in comparison with the repairing jig 75B.

The repairing jig 75B can transmit higher, though not extensive, heat energy to the conveyance belt 97 than the coupling jig 75A. Specifically, the repairing jig 75B can intensively transmit the heat energy to the region facing the first electrode surface 31A in the conveyance belt 97 than the coupling jig 75A.

In this manner, the second jig 75 can adjust the heating range of the conveyance belt 97 through the generation of electromagnetic waves from the first electrode 31 and the second electrode 32 by changing the distance between the support stand 94 and the conveyance belt 97 when welding the conveyance belt 97. The second jig 75 corresponds to an example of the heating range adjusting unit.

### Second Welding Process

Next, a second welding process is described with reference to FIG. 10. The second welding process is a conveyance belt welding method for performing repair welding of the conveyance belt 97 by using the conveyance belt welding apparatus 10 and the repairing jig 75B.

As illustrated in FIG. 10, at step S20, a second jig mounting step is performed. In the second jig mounting step, the second jig 75 is disposed at the support stand 94. Specifically, the repairing jig 75B is disposed at the support stand 94 when the repair welding of the conveyance belt 97 is performed. In this manner, the second jig mounting step is also a step of disposing the second jig 75 between the conveyance belt 97 and the support stand 94, and adjusting the distance between the first electrode 31 and the second electrode 32, and the support stand 94.

Next, at step S21, a conveyance belt supporting step is performed. In the conveyance belt supporting step, the conveyance belt 97 is maneuvered such that the repair region 97F is located on the upward direction Z1 side of the repairing jig 75B. In this manner, the repair region 97F is supported by the support stand 94 with the repairing jig 75B sandwiched between the repair region 97F and the support stand 94.

Next, at step S22, a repair material installing step is performed. In the repair material installing step, the repair material 97G is installed at the repair region 97F. Then, at step S23, the welding aid member applying step is performed as at step S14. In the welding aid member applying step, the welding aid member 74 is applied to the conveyance belt 97 and the repair material 97G in the repair region 97F. Subsequently, at step S24, the welding step is performed as at step S15. In the welding step, the conveyance belt 97 is welded by using the conveyance belt welding apparatus 10 in the state where the repairing jig 75B is installed.

In this manner, by using the repairing jig 75B at step S21, the distance between the first electrode surface 31A and the second electrode surface 32A, and the support stand 94 is adjusted. In this manner, the heat energy for heating the conveyance belt 97, the repair material 97G and the welding aid member 74 is adjusted. Specifically, by using the second jig 75, the intensity of the electromagnetic waves generated for the conveyance belt 97 is adjusted. As such, the second jig mounting step is a step of adjusting the intensity of the electromagnetic waves generated by the first electrode 31 and the second electrode 32 for the conveyance belt 97.

### Operations and Effects of Second Embodiment

Operations and effects of the second embodiment are described below.

(2-1) The heating range of the conveyance belt 97 through the generation of electromagnetic waves from the first electrode 31 and the second electrode 32 can be adjusted. Thus, the welding quality of the conveyance belt 97 can be improved, and the efficiency of the operation related to the welding of the conveyance belt 97 can be improved.

(2-2) In particular, in the related art, there is no conveyance belt welding apparatus that performs both the coupling welding of the conveyance belt 97 and the repair welding of the conveyance belt 97, while there is a conveyance belt welding apparatus that performs only one of these.

In view of this, by adjusting the heating range of the conveyance belt 97 through the generation of electromagnetic waves from the first electrode 31 and the second electrode 32, both the coupling welding of the conveyance belt 97 and the repair welding of the conveyance belt 97 can be performed. Thus, the welding quality of the conveyance belt 97 can be improved, and the efficiency of the operation related to the welding of the conveyance belt 97 can be improved.

(2-3) In addition, in the related art, there is a need to weld the conveyance belt 97 under a condition corresponding to the type of the conveyance belt 97 to be welded such as the material, layered structure, and thickness of the conveyance belt 97. However, the suitable welding condition of the conveyance belt 97 differs depending on the manufacturing company and the manufacturing process, and even when manufactured by the same manufacturing company and the same manufacturing process, the suitable welding condition differs depending on the production lot.

In view of this, by adjusting the heating range of the conveyance belt 97 through the generation of electromagnetic waves from the first electrode 31 and the second electrode 32, the welding of the conveyance belt 97 in accordance with the welding condition of the conveyance belt 97 can be achieved. Thus, the welding quality of the conveyance belt 97 can be improved, and the efficiency of the operation related to the welding of the conveyance belt 97 can be improved.

(2-4) With the second jig 75 disposed between the support stand 94 and the conveyance belt 97, the heating range of the conveyance belt 97 through the generation of electromagnetic waves from the first electrode 31 and the second electrode 32 can be adjusted. With this configuration, the heating range of the conveyance belt 97 through the generation of electromagnetic waves can be adjusted with a simple configuration. Thus, the welding quality of the conveyance belt 97 can be improved, and the efficiency of the operation related to the welding of the conveyance belt 97 can be improved.

(2-5) By adjusting the distance between the support stand 94 and the conveyance belt 97, the heating range of the conveyance belt 97 through the generation of electromagnetic waves from the first electrode 31 and the second electrode 32 can be adjusted. With this configuration, the heating range of the conveyance belt 97 through the generation of electromagnetic waves can be adjusted with a simple configuration. Thus, the welding quality of the conveyance belt 97 can be improved, and the efficiency of the operation related to the welding of the conveyance belt 97 can be improved.

### Third Embodiment

Next, a third embodiment is described.

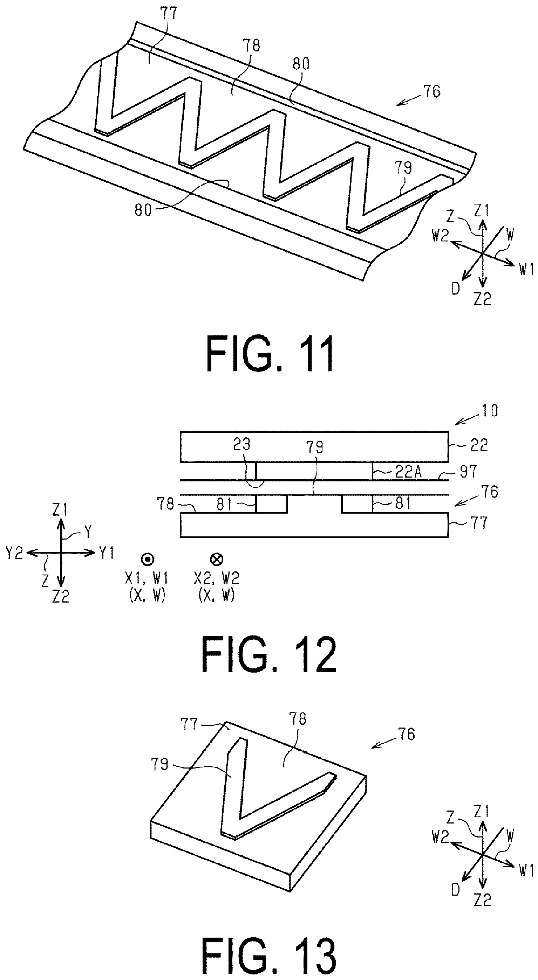

As illustrated in FIG. 11, in the third embodiment, the conveyance belt welding jig may include a third jig 76. The third jig 76 is configured to support the conveyance belt 97 when welding the conveyance belt 97 by using the conveyance belt welding apparatus 10. Specifically, the third jig 76 is configured to support the conveyance belt 97 when the coupling welding of the conveyance belt 97 is performed.

The third jig 76 includes a belt supporting part 77. The belt supporting part 77 is configured to support the conveyance belt 97. The belt supporting part 77 may be made of metal. The belt supporting part 77 includes a top surface 78. The top surface 78 is a surface facing the upward direction Z1 side. That is, the top surface 78 is a surface facing the direction of supporting the conveyance belt 97.

The belt supporting part 77 includes a protruding part 79. The protruding part 79 is configured to protrude from the top surface 78 toward the upward direction Z1 side. That is, the protruding part 79 is configured to protrude toward the direction of supporting the conveyance belt 97.

The protruding part 79 has a shape matching the welding shape of the conveyance belt 97. Specifically, the protruding part 79 may have a shape with a plurality of continuous V-shaped regions along the width direction W. That is, the protruding part 79 has a V-shape in plan view.

The third jig 76 includes a guide part 80. The guide part 80 is configured to protrude from the top surface 78 toward the upward direction Z1 side. The guide part 80 may be a rail extending in the width direction W. The guide part 80 may be a pair of rails extending in the width direction W.

The guide part 80 is configured to guide the movement of the contact part 22. It can be said that in the case where the conveyance belt 97 is welded by moving the contact part 22 in the width direction W in this manner, the guide part 80 extends along the movement direction of the contact part 22 of the conveyance belt welding apparatus 10.

The guide part 80 is provided to protrude than the protruding part 79 in the vertical direction Z. Specifically, the guide part 80 is provided to protrude than the height of the sum of the thickness of the conveyance belt 97 and the protruding part 79 in the vertical direction Z. In this manner, even in the state where the protruding part 79 is in contact with the conveyance belt 97, the guide part 80 can guide the movement of the contact part 22.

### Operations and Effects of Third Embodiment

Operations and effects of the third embodiment are described below.

(3-1) In the related art, when the coupling welding of the conveyance belt 97 is performed, it is heated in the state where the one end portion 97A of the conveyance belt 97 and the other end portion 97B of the conveyance belt 97 are sandwiched by flat plates. Consequently, at the one end portion 97A of the conveyance belt 97 and the other end portion 97B of the conveyance belt 97, the heat may be transmitted to unnecessary regions, thus impairing the welding quality of the conveyance belt 97.

In view of this, the protruding part 79 has a shape protruding in the support direction of supporting the conveyance belt 97, and matching the welding shape of the conveyance belt 97. With this configuration, the protruding part 79 can support the conveyance belt 97 with the shape matching the welding shape of the conveyance belt 97. In this manner, the region corresponding to the welding shape of the conveyance belt 97 can be intensively heated, and thus heating to unnecessary regions in the conveyance belt 97 can be suppressed. Thus, the welding quality of the conveyance belt 97 can be improved, and the efficiency of the operation related to the welding of the conveyance belt 97 can be improved. In particular, the heat energy can be intensively transmitted to the required region, and thus energy saving can be achieved.

(3-2) The guide part 80 guides the contact part 22 along the movement direction of the contact part 22. With this configuration, the movement direction of the contact part 22 can be guided by moving the electromagnetic wave generation unit 11 along the guide part 80. In this manner, heating to unnecessary regions in the conveyance belt 97 can be suppressed. Thus, the welding quality of the conveyance belt 97 can be improved, and the efficiency of the operation related to the welding of the conveyance belt 97 can be improved.

### Fourth Embodiment

Next, a fourth embodiment is described.

As illustrated in FIG. 12, in the fourth embodiment, the belt supporting part 77 may include an insulation part 81. The insulation part 81 less transmits the heat energy than the protruding part 79 made of metal. The insulation part 81 is configured to protrude from the top surface 78 toward the upward direction Z1 side. The insulation part 81 may have the same height as the protruding part 79 in the vertical direction Z. The insulation part 81 is provided around the protruding part 79 in plan view. The insulation part 81 may be provided with a predetermined width around the protruding part 79 in plan view.

The protruding part 79 and the insulation part 81 may have the same shape as the shape of the contact surface 23 of the conveyance belt welding apparatus 10. The protruding part 79 is included in the contact surface 23 in plan view, but is narrower than the contact surface 23. Specifically, in plan view, the protruding part 79 overlaps the center portion of the contact surface 23, but does not overlap the end portion of the contact surface 23, and the insulation part 81 overlaps the end portion of the contact surface 23 in plan view. In this manner, the protruding part 79 may have a shape corresponding to the contact surface 23 of the conveyance belt welding apparatus 10.

In addition, the contact part 22 may include a protruding contact part 22A. The protruding contact part 22A is a portion protruding toward the downward direction Z2 side in the contact part 22. The protruding contact part 22A includes the contact surface 23. The contact surface 23 may have a shape corresponding to the welding region of the conveyance belt 97.

### Operations and Effects of Fourth Embodiment

Operations and effects of the fourth embodiment are described below.

(4-1) The insulation part 81 is located at the periphery of the protruding part 79. With this configuration, with the insulation part 81 provided around the protruding part 79, the region corresponding to the protruding part 79 in the conveyance belt 97 can be intensively heated, and heating to unnecessary regions in the conveyance belt 97 can be suppressed. Thus, the welding quality of the conveyance belt 97 can be improved, and the efficiency of the operation related to the welding of the conveyance belt 97 can be improved.

(4-2) In addition, the conveyance belt 97 can be supported by both the protruding part 79 and the insulation part 81. In this manner, the conveyance belt 97 can be stably supported while concentrating the pressure on the conveyance belt 97.

(4-3) The protruding part 79 has a shape corresponding to the contact surface 23. With this configuration, the protruding part 79 can support the conveyance belt 97 with the shape corresponding to the contact surface 23. In this manner, the region corresponding to the contact surface 23 can be intensively heated, and heating to unnecessary regions in the conveyance belt 97 can be suppressed. Thus, the welding quality of the conveyance belt 97 can be improved, and the efficiency of the operation related to the welding of the conveyance belt 97 can be improved.

### Modifications

The embodiments may be modified as follows for implementation. The embodiments and modifications described below may be combined for implementation insofar as they are not technically inconsistent.

In the third embodiment, as illustrated in FIG. 13, the protruding part 79 with one V-shape in plan view may be provided as the belt supporting part 77. In this manner, by coupling a plurality of the third jigs 76 in the width direction W, a shape with a plurality of continuous V-shaped regions along the width direction W may be provided as a plurality of the protruding parts 79. In this manner, the number of the third jigs 76 corresponding to the length of the conveyance belt 97 in the width direction W can be formed.

In the third embodiment, the guide part 80 may be displaceable between a first displacement position and a second displacement position in accordance with the operation of the operator. The first displacement position is a position where the guide part 80 protrudes than the height of the sum of the thickness of the conveyance belt 97 and the protruding part 79 in the vertical direction Z. The second displacement position may be a position where the guide part 80 does not protrude than the height of the sum of the thickness of the conveyance belt 97 and the protruding part 79 in the vertical direction Z. The second displacement position may be a position where the guide part 80 is at the same height as the top surface 78. The guide part 80 may be provided as a member separated from the belt supporting part 77.

The belt supporting part 77 may include the protruding part 79 with a W-shape in plan view. The belt supporting part 77 may include the protruding part 79 with a linear shape extending in the width direction W in plan view.

The guide part 80 may extend at a predetermined angle more tilted than the width direction W. The predetermined angle may be a tilt angle of the V-shape of the protruding part 79 with respect to the conveyance direction D in plan view. That is, in plan view, the guide part 80 may extend in the direction that intersects the tilt direction of the V-shape of the protruding part 79. In the forward path, the electromagnetic wave generation unit 11 may be guided by the guide part 80 tilted by a predetermined angle with respect to the forward direction. In the backward path, the electromagnetic wave generation unit 11 may be guided by the guide part 80 tilted by a predetermined angle with respect to the backward direction.

The electromagnetic wave generation unit 11 may be provided with a scale that indicates the movement length. The movement length may be a length indicating the next stop position of the electromagnetic wave generation unit 11 when welding the conveyance belt 97.

The third jig 76 may include a through hole with a shape matching the welding shape of the conveyance belt 97 instead of the protruding part 79. The through hole may have a V-shape in plan view. In this case, the third jig 76 may be provided between the contact surface 23 and the conveyance belt 97. In this manner, the third jig 76 may concentrate on the region corresponding to the through hole the heat energy transmitted to the conveyance belt 97 through the generation of electromagnetic waves from the electromagnetic wave generation unit 11 between the contact surface 23 and the conveyance belt 97.

In the second embodiment, the conveyance belt welding apparatus 10 may include a heating range adjusting unit that adjusts any of the amplitude of the high-frequency voltage, the duty of the high-frequency voltage and the pulse width of the high-frequency voltage. The electromagnetic wave generation unit 11 may include a heating range adjusting unit, and the high-frequency voltage generation unit 12 may include a heating range adjusting unit. In this manner, the heating range adjusting unit can adjust the heating range of the conveyance belt 97 through the generation of electromagnetic waves. As a specific example, the heating range adjusting unit can perform adjustment to a rectangular shape as the duty of the high-frequency voltage by switching the four transistors. The conveyance belt welding apparatus 10 may include a heating range adjusting unit that adjusts any of the amplitude of the high-frequency voltage, the duty of high-frequency voltage and the pulse width of the high-frequency voltage in accordance with the operation of the operation unit 15.

In the second embodiment, the second jig 75 may not be disposed between the support stand 94 and the conveyance belt 97 as long as the heating range can be adjusted for the case of performing the coupling welding of the conveyance belt 97 and the case of performing the repair welding of the conveyance belt 97. Specifically, the second jig 75 may not be disposed between the support stand 94 and the conveyance belt 97 when the repair welding of the conveyance belt 97 is performed.

In the second embodiment, the value of the heat energy transmitted to the conveyance belt 97 is not limited as long as the heating range can be adjusted for the case of performing the coupling welding of the conveyance belt 97 and the case of performing the repair welding of the conveyance belt 97.

In the second embodiment, the adjustment of the heating range of the electromagnetic wave generation unit 11 is not limited to adjusting the distance between the metal support surface 94A that supports the conveyance belt 97 and the conveyance belt 97. For example, as the adjustment of the heating range of the electromagnetic wave generation unit 11, the distance between the first electrode 31 and the second electrode 32, and the conveyance belt 97 may be adjusted. Even with this configuration, the heating range of the conveyance belt 97 through the generation of electromagnetic waves from the first electrode 31 and the second electrode 32 can be adjusted.

In the first embodiment, the first jig 70 may include three or more first positioning parts 73A. The first jig 70 may include three or more second positioning parts 73B.

In the first jig 70, the positioning part 73 may be provided at a position corresponding to the center portion of the conveyance belt 97 in the width direction W, not both end portions of the conveyance belt 97 in the width direction W. Specifically, the positioning part 73 may be provided in a region that is not cut off after the welding of the conveyance belt 97. In this case, it is preferable that the positioning part 73 have a small diameter in plan view for the purpose of performing the repair welding of the conveyance belt 97 to repair the through hole after the coupling welding of the conveyance belt 97. In the case where the positioning part 73 is provided at a position corresponding to the center portion of the conveyance belt 97 in the width direction W, the diameter in plan view may be smaller than in the case where it is provided at the position corresponding to both end portions of the conveyance belt 97 in the width direction W.

In the case where the conveyance belt 97 has a layered structure composed of a plurality of types of materials with different thermal expansion coefficients and heating values, the thermal expansion coefficients of the plurality of types of materials may be equalized by changing the heating values of the plurality of types of materials by applying the welding aid member 74 that provides high heating values.

In the related art, when heating the conveyance belt 97 through generation of electromagnetic waves, warp has occurred in the welding of the conveyance belt 97 due to the different thermal expansion coefficients among the materials of making up the layered structure. In view of this, the occurrence of the warp in the welding of the conveyance belt 97 can be suppressed by using the welding aid member 74 as described above. As a specific example, in the case where the heating is performed from the polyurethane material side in the layered structure composed of the polyurethane material and the aramid material, the heating value is changed for the polyurethane material and the aramid material by applying the welding aid member 74. In this manner, the thermal expansion coefficients may be equalized for the polyurethane material and the aramid material.

Specifically, depending on the type of the conveyance belt 97, the heating resistance for the frequency of the electromagnetic waves differs, and therefore the heating value for the frequency of the electromagnetic waves differs. In view of this, the heating value for the frequency of the electromagnetic waves is measured for each type of the conveyance belt 97. Preferably, in the case where the welding aid member 74 is not used, the electromagnetic wave generation unit 11 generates electromagnetic waves with a frequency that achieves a heating value suitable as the heating value corresponding to the type of the conveyance belt 97 in the industrial scientific medical band. On the other hand, preferably, in the case where the welding aid member 74 is used, the electromagnetic wave generation unit 11 generates electromagnetic waves with a frequency that achieves a heating value suitable as the heating value corresponding to the type of the conveyance belt 97 in the industrial scientific medical band, and electromagnetic waves with a frequency with which the welding aid member 74 sufficiently generates heat. In addition, the type of the conveyance belt 97 may be selected such that the heating value is suitable at any of the frequencies in the industrial scientific medical band. The suitable heating value may include one for setting a maximum value of the heating value corresponding to the type of the conveyance belt 97. The suitable heating value may include one for setting a minimum value of the heating value corresponding to the type of the conveyance belt 97.

The welding aid member 74 is not limited to one to be applied to the conveyance belt 97, and it may be mixed in the material itself that makes up the conveyance belt 97. In addition, the welding aid member 74 may be mixed in the material itself that makes up the conveyance belt 97 such that the heating value is a suitable heating value at any of frequencies in the industrial scientific medical band.

The first welding process of the first embodiment may be performed when the coupling welding of the conveyance belt 97 is performed, and the second welding process of the second embodiment may be performed when the repair welding of the conveyance belt 97 is performed. That is, the first welding process may include a step of adjusting the heating range for the conveyance belt. In this case, in the first welding process, the step of adjusting the heating range for the conveyance belt may be performed before step S10, or between step S10 and step S11.

The conveyance belt welding jig may have a function of positioning the first jig 70, and a function of concentrating the heat energy of the third jig 76. Specifically, the protruding part 79 of the third jig 76 may be provided at the belt support surface 72 of the first jig 70. In addition, the positioning part 73 of the first jig 70 may be provided at both end portions of the third jig 76 in the width direction W.

In plan view, the housing case 21 may be located inside the outer periphery 32B of the second electrode 32 as long as it is located outside the inner periphery 32D of the second electrode 32. In plan view, the shield part 36 is located inside the housing case 21, but it may be located inside the outer periphery 32B of the second electrode 32 as long as it is located outside the inner periphery 32D of the second electrode 32. The shield part 36 may have a plate shape instead of the net shape.

The contact part 22 may not make surface contact with the conveyance belt 97 but may make point contact with the conveyance belt 97 as long as the distance between the first electrode 31 and the second electrode 32, and the conveyance belt 97 is within a predetermined range.

The contact part 22 may not make surface contact with the first electrode 31 and the second electrode 32, but may make point contact with the first electrode 31 and the second electrode 32 as long as the distance between the first electrode 31 and the second electrode 32, and the conveyance belt 97 is within a predetermined range. In addition, the contact part 22 may not make contact with the first electrode 31 and the second electrode 32.

At least one of the first electrode 31 and the second electrode 32 is not limited to the flat plate shape, and may have a substantially flat plate shape, for example. The substantially flat plate shape may include a shape curved in the thickness direction as the direction along the vertical direction Z, and a linear shape as a rectangular shape with very large aspect ratio, for example.

The recording apparatus 90 may be a laser printer that records images by attaching toner by using laser light. Specifically, the recording system of the recording apparatus 90 is not limited, and may be an ink-jet system or a laser system.

The expression "at least one of" used in the specification means one or more of desired options. As an example, in the case where the number of options is two, the expression "at least one of" used in the specification means only one option or both of the two options. As another example, in the case where the number of options is three or more, the expression "at least one of" used in the specification means only one option or any combination of two or more options.

## Claims

1. A conveyance belt welding method using a conveyance belt welding apparatus (10) configured to weld a conveyance belt (97) configured to convey a medium (99), wherein
the conveyance belt welding apparatus includes:
a contact part (22) including a contact surface (23) configured to make contact with the conveyance belt (97),
a first electrode (31),
a second electrode (32) disposed to surround the first electrode in plan view from a first direction toward the conveyance belt,
a first conductor (33) including a coil (35) and configured to electrically couple a transmission line (13) configured to transmit a high-frequency voltage and the first electrode, and
a second conductor (34) configured to electrically couple the transmission line (13) and the second electrode, the conveyance belt welding method comprising:
sandwiching a material with a predetermined electrical conductivity, or a material with a dielectric loss tangent higher than that of the conveyance belt (97) between one end portion (97A) and another end portion (97B) where the conveyance belt is to be welded; and
welding the conveyance belt (97) by the first electrode (31) and the second electrode (32) by generating electromagnetic waves in accordance with application of a high-frequency voltage.

2. The conveyance belt welding method according to claim 1, wherein the material includes carbon black.

## Patentansprüche

1. Förderbandschweißverfahren, das eine Förderbandschweißvorrichtung (10) verwendet, die eingerichtet ist, ein Förderband (97) zu schweißen, das eingerichtet ist, ein Medium (99) zu fördern, wobei
die Förderbandschweißvorrichtung beinhaltet:
ein Kontaktteil (22), das eine Kontaktfläche (23) beinhaltet, die eingerichtet ist, mit dem Förderband (97) in Kontakt zu gelangen,
eine erste Elektrode (31),
eine zweite Elektrode (32), die so angeordnet ist, dass sie die erste Elektrode in Draufsicht aus einer ersten Richtung zu dem Förderband umgibt,
einen ersten Leiter (33), der eine Spule (35) beinhaltet und eingerichtet ist, eine Übertragungsleitung (13), die eingerichtet ist, eine Hochfrequenzspannung zu übertragen, und die erste Elektrode elektrisch zu koppeln, und
einen zweiten Leiter (34), der eingerichtet ist, die Übertragungsleitung (13) und die zweite Elektrode elektrisch zu koppeln, wobei das Förderbandschweißverfahren umfasst:
Einlegen eines Materials mit einer vorbestimmten elektrischen Leitfähigkeit oder eines Materials mit einer dielektrischen Verlusttangente, die höher als jene des Förderbandes (97) ist, zwischen einem Endabschnitt (97A) und einem anderen Endabschnitt (97B), wo das Förderband geschweißt werden soll; und
Schweißen des Förderbandes (97) durch die erste Elektrode (31) und die zweite Elektrode (32) durch Erzeugen elektromagnetischer Wellen in Übereinstimmung mit Anlegen einer Hochfrequenzspannung.

2. Förderbandschweißverfahren nach Anspruch 1, wobei das Material Industrieruß beinhaltet.

## Revendications

1. Procédé de soudage d'une courroie de transport au moyen d'un appareil de soudage de courroie de transport (10) configuré pour souder une courroie de transport (97) configurée pour transporter un support (99), dans lequel
l'appareil de soudage de courroie de transport comprend :
une partie de contact (22) comprenant une surface de contact (23) configurée pour entrer en contact avec la courroie de transport (97),
une première électrode (31),
une deuxième électrode (32) disposée de manière à entourer la première électrode dans une vue en plan, depuis une première direction orientée vers la courroie de transport,
un premier conducteur (33) comprenant une bobine (35) et configuré pour coupler électriquement une ligne de transmission (13) configurée pour transmettre une tension haute fréquence et la première électrode, et
un deuxième conducteur (34) configuré pour coupler électriquement la ligne de transmission (13) et la deuxième électrode, le procédé de soudage de courroie de transport comprenant :
la mise en sandwich d'un matériau présentant une conductivité électrique prédéterminée, ou d'un matériau présentant une tangente de perte diélectrique supérieure à celle de la courroie de transport (97), entre une partie d'extrémité (97A) et une autre partie d'extrémité (97B) au niveau desquelles la courroie de transport doit être soudée ; et
le soudage de la courroie de transport (97) au moyen de la première électrode (31) et de la deuxième électrode (32) en générant des ondes électromagnétiques en fonction de l'application d'une tension haute fréquence.

2. Procédé de soudage de courroie de transport selon la revendication 1, dans lequel le matériau comprend du noir de carbone.
